# EUROPÄISCHE PATENTSCHRIFT

(11) **EP 3 218 137 B1**
(45) Veröffentlichungstag und Bekanntmachung des Hinweises auf die Patenterteilung: **17.07.2019**
(21) Anmeldenummer: 15805119.3
(22) Anmeldetag: 12.11.2015
(51) Int. Cl.: B23K 20/12, B21D 22/02, B23K 9/08, B23K 20/26

(54) **PRESSSCHWEISSVORRICHTUNG UND PRESSSCHWEISSVERFAHREN**
PRESSURE WELDING DEVICE AND PRESSURE WELDING METHOD
DISPOSITIF ET PROCÉDÉ DE SOUDAGE PAR PRESSION

(30) Priorität: 12.11.2014 DE 202014105434 U
(43) Veröffentlichungstag der Anmeldung: 20.09.2017
(73) Patentinhaber: KUKA Deutschland GmbH, 86165 Augsburg (DE)
(72) Erfinder: BÜCHLER, Michael, 86179 Augsburg (DE); FISCHER, Otmar, 86150 Augsburg (DE); MEYER, Harald, 86199 Augsburg (DE); SCHNEIDER, Klaus, 86316 Friedberg (DE)
(74) Vertreter: Ernicke, Klaus Stefan
(86) Internationale Anmeldenummer: PCT/EP2015/076422
(87) Internationale Veröffentlichungsnummer: WO 2016/075228

(56) Entgegenhaltungen:
- WO-A1-86/05134
- DE-C1- 19 745 123
- DE-U1-202012 103 219
- JP-A- H03 268 884
- JP-A- 2011 025 281
- US-A1- 2009 242 613

## Beschreibung

Die Erfindung betrifft eine Pressschweißvorrichtung und ein Pressschweißverfahren.

Eine Pressschweißvorrichtung ist aus der Praxis bekannt. Sie kann als Reibschweißvorrichtung oder als Schweißvorrichtung mit einem magnetisch umlaufend bewegten Lichtbogen ausgebildet sein und weist in beiden Varianten jeweils eine Plastifizierungseinrichtung und eine Staucheinrichtung sowie Bauteilaufnahmen für die zu verschweißenden Bauteile auf. Sie besitzt ferner ein Maschinengestell, an dem ein Maschinenkopf mit einer Bauteilaufnahme beweglich angeordnet ist. Eine zugeordnete weitere Bauteilaufnahme ist ebenfalls beweglich am Maschinengestell angeordnet. Aus der Praxis sind Einkopfmaschinen und Doppelkopfmaschinen bekannt, wobei im letzteren Fall zwei Maschinenköpfe und ein oder zwei weitere bzw. zentrale Bauteilaufnahmen vorhanden sind. Bei den bekannten Pressschweißvorrichtungen wird eine eventuell erforderliche Nachbearbeitung des Schweißteils separat und an anderer Stelle durchgeführt.

Die JP 2011/25281 A befasst sich mit einem Reibschweißverfahren, wobei die schematisch dargestellte Reibschweißmaschine zwei axial gegenüber liegende, eigenständig drehbare Spindeln mit Bauteilaufnahmen für jeweils ein Bauteil aufweist. Eine der beiden Spindeln ist in Axialrichtung beweglich. Sie führt den Vorhub zum Plastifizieren und Stauchen sowie den Rückhub zum Be- und Entladen der Bauteile durch. Mit schematisch angedeuteten, seitlichen Meißeln können die Bauteile in der distanzierten Ladestellung und in der Schweißstellung bearbeitet werden. In der Schweißstellung ist das geschweißte Bauteil beidseits in den ortsfesten Bauteilaufnahmen eingespannt und hat eine Länge, die ausreichend Freiraum für den Meißel zum Abdrehen des Schweißwulstes bietet.

Es ist Aufgabe der vorliegenden Erfindung, eine verbesserte Pressschweißtechnik aufzuzeigen.

Die Erfindung löst diese Aufgabe mit den Merkmalen im Verfahrens- und Vorrichtungshauptanspruch.

Die beanspruchte Pressschweißtechnik, d.h. die Pressschweißvorrichtung und das Pressschweißverfahren, haben verschiedene Vorteile. Sie bieten einerseits eine Steigerung der Leistungsfähigkeit und der Prozessqualität beim Pressschweißen. Andererseits kann der Automatisierungsgrad und damit auch die Wirtschaftlichkeit verbessert werden. Rüst- und Stillstandszeiten können weitgehend vermieden oder zumindest reduziert werden. Zudem wird die Ergonomie verbessert.

Die beanspruchte Bearbeitungseinrichtung erlaubt eine Nachbearbeitung des Schweißteils in Aufnahme- oder Spannstellung an der Pressschweißvorrichtung. Eine Bearbeitung erfolgt zum Beispiel an der oder den Schweißstellen, wobei der dortige ringförmige Schweißwulst entfernt wird. Dies ist effektiv und spart Zeit, zusätzlichen Aufwand und Kosten.

Die Schweißstelle befindet sich häufig in unmittelbarer Nähe des Maschinenkopfes und der dortigen Bauteilaufnahme, was zu Platzproblemen führen kann. Die beanspruchte Stelleinrichtung erlaubt eine Abstandsbildung zwischen dem Maschinenkopf und der zugeordneten weiteren Bauteilaufnahme, wodurch ausreichend Platz für die Bearbeitung und eine gute Zugänglichkeit zur Bearbeitungsstelle, insbesondere zur Schweißstelle, geschaffen wird.

Die mittels der Stelleinrichtung steuerbare und eigenständig angetriebene Bewegung der weiteren oder zentralen Bauteilaufnahme ermöglicht außerdem völlig andere Bearbeitungstechniken.

Eine Bearbeitung ist außerdem grundsätzlich an einer beliebigen Bearbeitungsstelle am Schweißteil und nicht nur an der Schweißstelle möglich und vorgesehen. Auch der Bearbeitungsprozess kann beliebig ausgebildet sein. Bevorzugt wird ein Trennprozess, insbesondere Abdreh- oder Stanzprozess und eine entsprechende Einrichtungs- und Werkzeugausbildung.

Die beanspruchte Stelleinrichtung erlaubt außerdem eine einfache und schnelle Anpassung der Pressschweißvorrichtung an unterschiedliche Bauteilmaße, insbesondere Bauteillängen. Zudem können Einlege- oder Bauteiltoleranzen sowie etwaig im Schweißprozess auftretende elastische Bauteilverkürzungen kompensiert werden. Dies kann automatisch erfolgen.

Mit der Stelleinrichtung wird auch eine Optimierung des Pressschweißprozesses und eine optimale Kontaktierung der zu verschweißenden Bauteile und des Stauchkopfes erreicht. Dies ist auch für die Optimierung der Prozessabläufe, insbesondere eine programmierte Steuerung der Plastifizierungs- und Stauchphasen sowie der dabei eintretenden Vorschübe und Bauteilverkürzungen von Vorteil. Dadurch können Schweißteile mit sehr hoher Qualität hergestellt werden. Dies betrifft einerseits die Qualität der Schweißverbindung und andererseits die gleichbleibende Länge der Schweißteile.

Ferner ist die Staucheinrichtung mit einem zwischen dem Maschinenkopf und dem Stauchkopf angeordneten und auf Zug wirkenden Stauchantrieb modifiziert. Dieser weist zwei oder mehr parallele Antriebseinheiten, z.B. Zylinder, auf, die längs und beidseitig neben der Maschinenachse angeordnet sind. Vorzugsweise sind die Zylindergehäuse am bevorzugt stationären Maschinenkopf abgestützt und die ausfahrbahren Kolbenstangen an ihrem freien Ende mit dem Stauchkopf fest verbunden. Die Stauchkräfte werden hierdurch in knickgünstiger Weise als Zugkräfte und nicht mehr als Druckkräfte wie beim Stand der Technik übertragen.

Die beanspruchte Pressschweißvorrichtung ist mit einer Plastifizierungseinrichtung und einer Staucheinrichtung sowie Bauteilaufnahmen für die zu verschweißenden Bauteile und einem Maschinengestell ausgestattet, wobei die Pressschweißvorrichtung einen Maschinenkopf mit einer Bauteilaufnahme und eine zugeordnete weitere Bauteilaufnahme aufweist und der Maschinenkopf beweglich am Maschinengestell angeordnet ist.

Die Pressschweißvorrichtung weist eine Plastifizierungseinrichtung und eine Staucheinrichtung sowie eine Halterung für die zu verschweißenden Bauteile und ein Maschinengestell sowie einen Maschinenkopf und einen Stauch- oder Stützkopf auf, die längs einer Maschinenachse am Maschinengestell relativ zueinander beweglich sind, wobei die Staucheinrichtung einen zwischen dem Maschinenkopf und dem Stauch- oder Stützkopf angeordneten und auf Zug wirkenden Stauchantrieb mit zwei oder mehr parallelen Antriebseinheiten aufweist, die längs und beidseitig neben der Maschinenachse angeordnet sind.

Die beanspruchte Ausbildung und Anordnung des Stauchantriebs erlaubt außerdem einen Kraftfluss in einem geschlossenen Kreis und zwischen dem Maschinenkopf und dem Stauchkopf, was für eine verbesserte Kraftabstützung sorgt und unerwünschte Verformungen vermeidet sowie das Maschinengestell entlastet. Durch die unterschiedlichen Höhenlagen der Zylinder, insbesondere ihrer Kolbenstangen, kann die Ergonomie und die Zugänglichkeit am Bedienbereich bzw. an der Bedienseite der Pressschweißvorrichtung verbessert werden. Zudem kann die schwimmend gelagerte Bauteilaufnahme zusätzlich an den Kolbenstangen über Gleitlager geführt werden.

Für die Pressschweißvorrichtung können weitere vorteilhafte Ergänzungen durch Zusatzkomponenten vorgenommen werden.

Dies betrifft z.B. eine im Antriebsstrang zwischen Spindelantrieb und Spindel angeordnete Betätigungseinrichtung für eine Spanneinrichtung an der Bauteilaufnahme des Maschinenstocks bzw. Spindelstocks. Hierbei kann das Antriebsmoment über das Antriebsgehäuse eines Betätigungsantriebs weitestgehend verformungsfrei übertragen werden. Somit lassen sich auch sehr hohe Momente in Verbindung mit einer Spannvorrichtungsbetätigung übertragen. Andererseits ist hierdurch ein Direktantrieb möglich, bei dem der Antriebsmotor mit seiner Motorachse im wesentlichen fluchtend mit der Spindelachse ausgerichtet werden kann. Durch die Trennung der Betätigungseinrichtung vom Antriebsmotor kann dieser in beliebiger Weise ausgebildet sein. Dies ermöglicht den Einsatz von kostengünstigen Standardmotoren. Außerdem ist ein Direktantrieb für verfahrbare Maschinenköpfe besonders günstig.

Der Direktantrieb spart das in vielen Fällen bisher übliche Vorgelege mit einem Riementrieb ein. Die Einleitung von Querkräften auf den Antriebsstrang kann vermieden werden. Die Verschleißanfälligkeit wird deutlich gemindert.

Außerdem können im Antriebsstrang weitere Komponenten untergebracht werden, z.B. eine Lammellenbremse und eine Drehkupplung zum Ausgleich von Fluchtungsfehlern. Zudem kann eine Massenentkopplung zwischen dem Spindelantrieb und einem im Prozess axial vorgeschobenen Maschinenkopf implementiert werden.

Ferner ist es möglich, den Antriebsmotor mit einer Schwungscheibenanordnung zu kombinieren, die vom Maschinenkopf aus gesehen hinter dem Antriebsmotor sitzen kann. Der Spindelantrieb kann zudem wahlweise stationär oder schwimmend bzw. in Richtung der Maschinenachse verfahrbar am Maschinengestell angeordnet sein. Durch die beanspruchte Betätigungseinrichtung ergibt sich eine wesentlich größere Bandbreite und Gestaltungsfreiheit für den Spindelantrieb. Dies ermöglicht außerdem eine Anpassung an unterschiedliche Maschinen- und Betriebs- oder Prozesserfordernisse.

Die Pressschweißvorrichtung kann in unterschiedlicher Weise ausgebildet sein. Sie kann z.B. als Reibschweißvorrichtung ausgeführt sein. Die Bauteile werden dabei vorzugsweise längs der Maschinenachse ausgerichtet und an ihren einander zugekehrten Stirnrändern durch Reiben plastifiziert und durch anschließendes axiales Stauchen miteinander verbunden. Alternativ ist ein Pressschweißen mit einem umlaufend bewegten Lichtbogen möglich. Der Lichtbogenumlauf kann hierbei durch eine Treibeinrichtung gesteuert werden. Eine solche Pressschweißvorrichtung kann ebenfalls eine drehbare Bauteilaufnahme am Maschinenkopf aufweisen.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Pressschweißvorrichtung in einer perspektivischen Seitenansicht,
- Figur 2:: die Pressschweißvorrichtung von Figur 1 in einer anderen perspektivischen Seitenansicht,
- Figur 3:: eine Stirnansicht der Pressschweißvorrichtung von Figur 1 und 2,
- Figur 4:: einen Längsschnitt durch die Pressschweißvorrichtung gemäß Schnittlinie IV - IV von von Figur 3
- Figur 5:: eine vergrößerte Darstellung des Details V von Figur 4,
- Figur 6 bis 9:: die Pressschweißvorrichtung von Figur 1 in verschiedenen Betriebsstellungen,
- Figur 10:: eine Variante der Pressschweißvorrichtung von Figur 1 in einer perspektivischen Seitenansicht,
- Figur 11:: eine Pressschweißvorrichtung mit einer unverkleideten Bearbeitungseinrichtung,
- Figur 12 und 13:: die Bearbeitungseinrichtung von Figur 11 in verschiedenen Ansichten und
- Figur 14:: eine Variante der Pressschweißvorrichtung und der Bearbeitungseinrichtung, die nicht unter Anspruch 1 und 12 fällt.

Die Erfindung betrifft eine Pressschweißvorrichtung (1) und ein Pressschweißverfahren.

Die Pressschweißvorrichtung (1) und das Pressschweißverfahren können unterschiedlich ausgebildet sein. Gemeinsam ist den verschiedenen Varianten eine Plastifizierungseinrichtung (7) und eine Staucheinrichtung (8), mit der die zu verschweißenden Bauteile (2,3,3',4) an den einander zugekehrten Seiten oder Rändern aufgeschmolzen oder erweicht und anschließend unter Bildung eines Schweißteils (5,5') gestaucht werden. Die Staucheinrichtung (8) weist hierfür einen Stauchantrieb (22) auf, der die Bauteile (2,3,3',4) relativ zueinander bewegt.

Die Pressschweißvorrichtung (1) weist ferner eine Maschinen- und Prozesssteuerung (nicht dargestellt) auf, die mit den nachfolgend beschriebenen Maschinenkomponenten verbunden ist und diese steuert. Die Maschinen- und Prozesssteuerung ist außerdem mit den nachgenannten Erfassungs-, Detektions- oder Messeinrichtungen verbunden und verarbeitet deren Signale. Sie kann speicherprogrammierbar ausgebildet sein und ein oder mehrere Prozess- oder Ablaufprogramme, eine Technologiedatenbank, Datenspeicher für Programme und aufgenommene Prozessdaten, eine Qualitätsüberwachung nebst Protokollierung oder dgl. beinhalten.

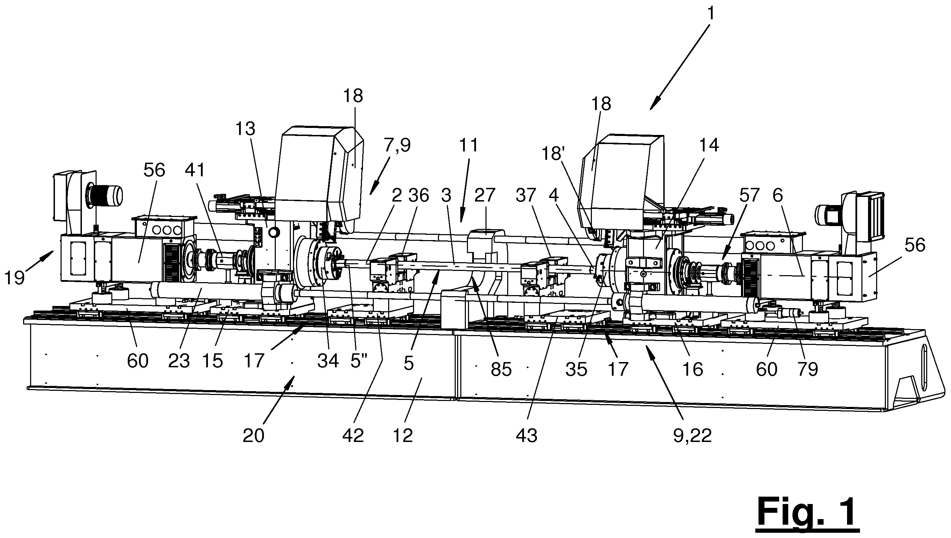

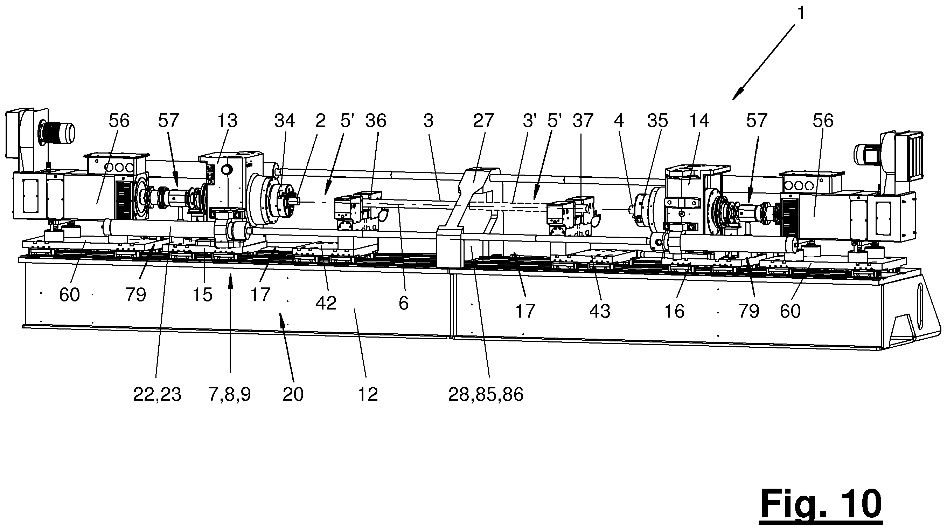

Die Plastifizierungseinrichtung (7) und das Plastifizierungsverfahren können unterschiedlich ausgebildet sein. Bei den in Figur 1 und 10 gezeigten Ausführungsformen ist die Pressschweißvorrichtung (1) als Reibschweißvorrichtung ausgebildet, wobei die Plastifizierungseinrichtung (7) eine Reibeinrichtung (9) aufweist.

In einer nicht dargestellten Variante kann die Plastifizierungseinrichtung (7) eine Lichtbogeneinrichtung aufweisen, welche die Bauteilränder mit einem Lichtbogen erwärmt und angeschmilzt, wobei der Lichtbogen mittels einer Treibeinrichtung entlang des Bauteilumfangs umlaufend mit Magnetkraft bewegt wird.

Die Pressschweißvorrichtung (1) weist in den verschiedenen Varianten jeweils ein Maschinengestell (12) mit einer Längs- oder Maschinenachse (6) und eine Halterung (11) mit Bauteilaufnahmen (34,35,36,37) für die zu verschweißenden Bauteile (2,3,3',4) auf. Das Maschinengestell (12) hat ein flurgebundenes Maschinenbett, auf dem die nachfolgend erläuterten Komponenten der Pressschweißvorrichtung (1) angeordnet sind. Ferner ist eine Betriebsmittelversorgung (19) vorhanden. Sie stellt die benötigten Betriebsmittel, insbesondere elektrischen Strom, Hydraulikflüssigkeit, Druckluft, Schmier- und Kühlmittel oder dgl. zur Verfügung und leitet sie zu den jeweiligen Verbrauchern.

Die Pressschweißvorrichtung (1) hat ein umgebendes schützendes Gehäuse mit einem verschließbaren Zugang an der Bedienseite (20). Hier kann ein Werker oder ein Roboter die zu fügenden Bauteile (2,3,3',4) zuführen und das fertige Schweißteil (5,5') abführen.

Das Pressschweißen der Bauteile (2,3,3',4) erfolgt in Richtung der Maschinenachse (6), entlang der auch die Bauteile (2,3,3',4) ausgerichtet sind. Die Bauteile (2,3,3',4) werden dabei an den einander zugekehrten Stirnseiten oder Rändern plastifiziert, insbesondere durch rotierendes Reiben oder durch den umlaufenden Lichtbogen, und entlang der Maschinenachse (6) gestaucht.

Die Bauteile (2,3,3',4) können aus unterschiedlichen Werkstoffen bestehen. Vorzugsweise kommen metallische Werkstoffe, insbesondere Stahl, Leichtmetalllegierungen, Gusslegierungen oder dergleichen zum Einsatz. Die Werkstoffpaarungen können unterschiedlich sein. Hierbei können insbesondere eisenhaltige Werkstoffe mit Nichteisenmetallen gefügt werden. Außerdem können nichtmetallische Werkstoffe, z.B. Keramikwerkstoffe geschweißt werden, insbesondere in Verbindung mit einem anderen metallischen Bauteil.

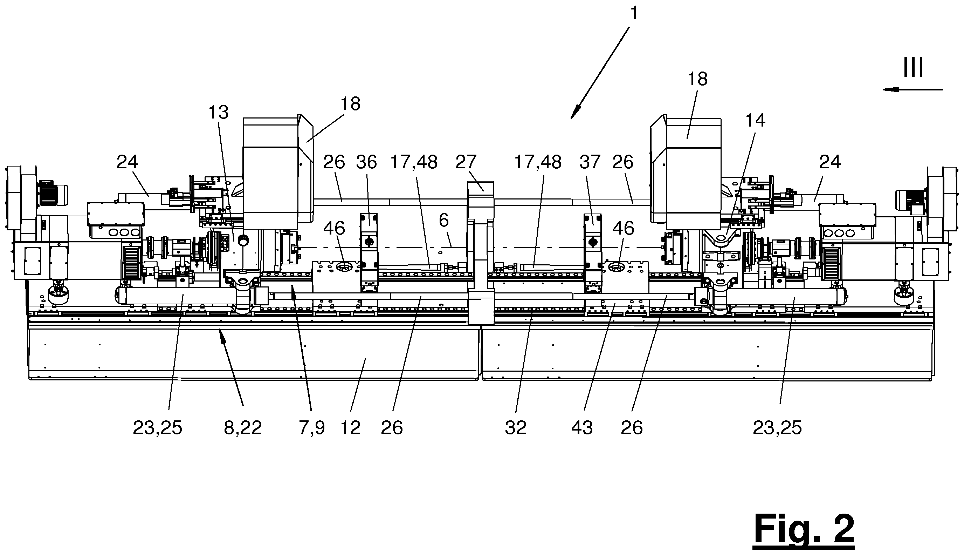

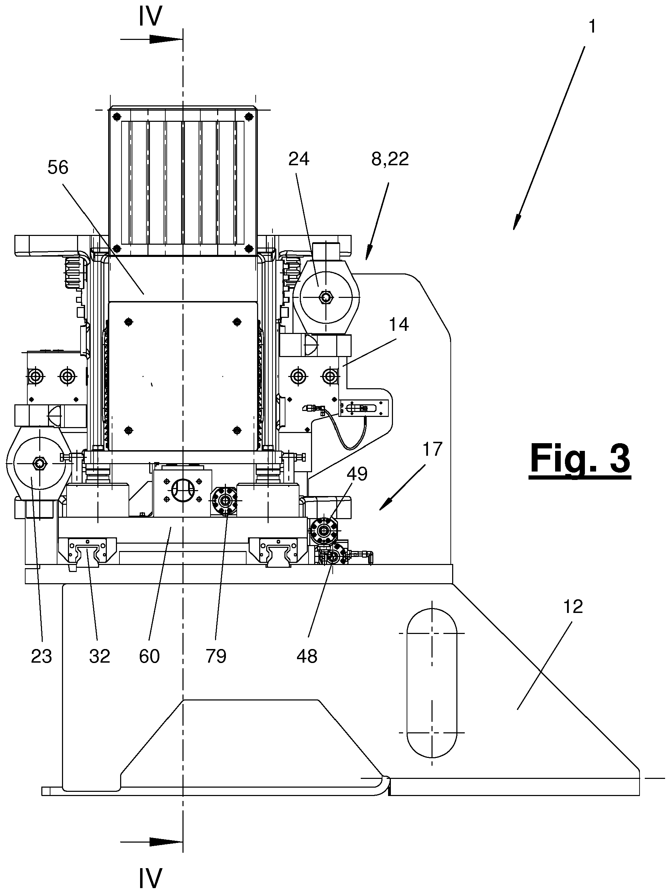

Figur 1 bis 5 zeigen eine erste Variante der Pressschweißvorrichtung (1) in Form einer Doppelkopfmaschine, in der zwei äußere Bauteile (2,4) bevorzugt gleichzeitig an die Enden eines zentralen Bauteils (3) geschweißt werden. Hierdurch entsteht ein dreiteiliges Schweißteil (5).

In Figur 10 ist eine zweite Variante dargestellt, die als doppelte Einkopfmaschine ausgebildet ist, in der endseitige Bauteile (2,4) jeweils an ein Bauteil (3,3') geschweißt werden, wobei zwei jeweils zweiteilige Schweißteile (5') entstehen. Diese beiden Schweißprozesse können unabhängig voneinander ablaufen. Ferner ist eine nicht dargestellte Ausbildung der Pressschweißvorrichtung (1) als einfache Einkopfmaschine möglich, die sich z.B. als Abwandlung, insbesondere Halbierung, von Figur 10 darstellt.

In den verschiedenen Varianten weist die Pressschweißvorrichtung (1) jeweils mindestens einen Maschinenkopf (13, 14) mit einer Bauteilaufnahme (34,35) auf, der beweglich am Maschinengestell (12) angeordnet ist. Bei den Varianten von Figur 1 und 10 der Doppelkopfmaschine oder doppelten Einkopfmaschine sind zwei Maschinenköpfe (13, 14) einander an der Maschinenachse (6) gegenüberliegend am Maschinengestell (12) beweglich angeordnet. Bei der vorerwähnten Einkopfmaschine ist nur ein beweglicher Maschinenkopf (13) vorgesehen. In anderen Varianten kann die Maschinenkopfzahl auch größer als zwei sein. Die mehrfachen Maschinenköpfe (13, 14) sind bevorzugt gleichartig ausgebildet, können alternativ aber auch unterschiedlich sein.

Der oder die Maschinenköpfe (13, 14) sind jeweils axial verfahrbar gegenüber dem Maschinengestell (12), insbesondere dessen Maschinenbett, gelagert. Sie sind hierfür z.B. auf einem Träger (15, 16) angeordnet, der mittels einer längs der Maschinenachse (6) ausgerichteten Führung (32) am Maschinenbett längs der Maschinenachse (6) verfahrbar geführt und abgestützt ist.

Der Maschinenkopf (13, 14) wird jeweils vom Stauchantrieb (22) bewegt. In den gezeigten Ausführungsbeispielen von Figur 1 und 10 ist jedem Maschinenkopf (13, 14) ein eigener Stauchantrieb (22) zugeordnet. Dieser kann sich jeweils an einem zentralen und am Maschinengestell (12) stationär angeordneten Stauchkopf oder Stützkopf (27) abstützen. Ein solcher stationärer Stauch- oder Stützkopf (27) kann auch bei einer Einkopfmaschine vorhanden sein. Bei einer Variante der Pressschweißvorrichtung (1), z.B. einer Doppelkopfmaschine, kann auch ein für beide Maschinenköpfe (13, 14) gemeinsamer Stauchantrieb (22) zum Einsatz kommen. In der bevorzugten und nachfolgend näher erläuterten Ausführungsform entwickelt der Stauchantrieb (22) Zugkräfte.

Die Halterung (11) für die Bauteile (2,3,3',4) weist außer der Bauteilaufnahme (34,35) am jeweiligen Maschinenkopf (13, 14) eine weitere Bauteilaufnahme (36,37) auf, die zwischen dem Maschinenkopf (13, 14) und dem Stauch- oder Stützkopf (27) am Maschinengestell (12) beweglich angeordnet ist. Vorzugsweise ist die Bauteilaufnahme (36, 37) längs der Maschinenachse (6) verfahrbar gelagert. Hierfür kann die jeweilige Bauteilaufnahme (36,37) z.B. einen Träger (42,43), insbesondere einen Schlitten aufweisen, der ebenfalls auf der Führung (32) längs verfahrbar gelagert ist. Diese sogenannte weitere oder zentrale Bauteilaufnahme (36,37) weist eine steuerbare Spannvorrichtung (39) mit mehreren Spannelementen (40) zum Einspannen eines Bauteils (3,3') auf.

Die weitere oder zentrale Bauteilaufnahme (36,37) kann mittels einer steuerbaren Fixiereinrichtung (46) bedarfsweise am Maschinenbett (12), insbesondere an der Führung (32) durch Klemmung oder auf andere Weise fixiert werden. Die Fixiereinrichtung (46) weist z.B. eine federnd vorgespannte Klemmung gegen die Führung (32) auf, die hydraulisch gelöst werden kann.

Bei der in Figur 1 bis 5 gezeigten Doppelkopfmaschine sind zwei solche zentrale Bauteilaufnahmen (36,37) zwischen den endseitigen Maschinenköpfen (13, 14) angeordnet und nehmen gemeinsam ein zentrales und somit drittes Bauteil (3) auf. Bei der in Figur 10 gezeigten doppelten Einkopfmaschine ist jedem Maschinenkopf (13, 14) jeweils eine weitere oder zentrale Bauteilaufnahem (36,37) zugeordnet, die ein einzelnes weiteres Bauteil (3,3') aufnimmt. Bei der nicht dargestellten Einkopfmaschine sind ein Maschinenkopf (13) und eine weitere Bauteilaufnahme (36) vorhanden, wobei letztere ein weiteres Bauteil (3) aufnimmt.

Die Bauteilaufnahmen (34,35,36,37) können das jeweilige Bauteil (2,3,3',4) in beliebig geeigneter Weise aufnehmen. Vorzugsweise besitzen sie hierfür jeweils eine fernsteuerbare Spanneinrichtung (39) mit verstellbaren Spannelementen (40) und eine Betätigungseinrichtung (41). Die Spanneinrichtung (39) kann als Spannfutter, ggf. in ein- oder mehrstufiger Ausführung, oder als Zentrumsspanner oder in anderer Weise ausgebildet sein.

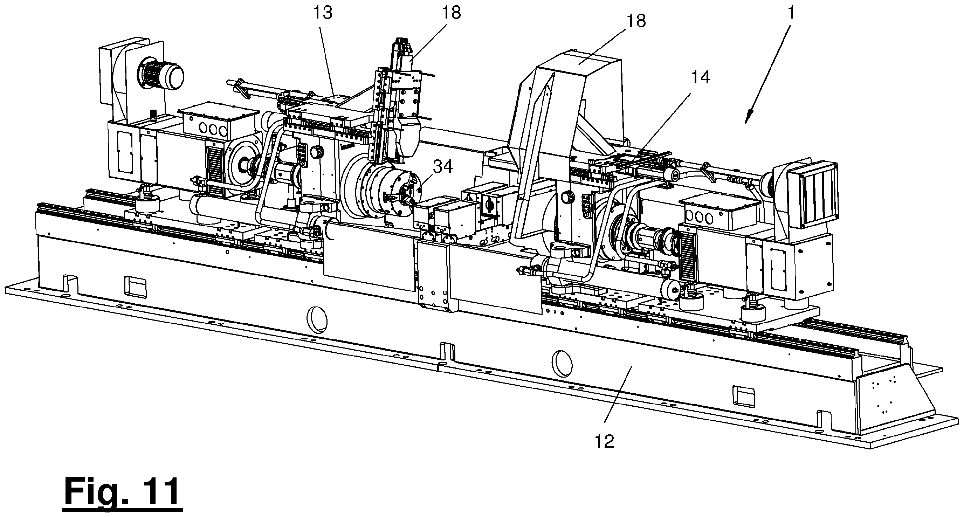

Die Pressschweißvorrichtung (1) weist eine dem Maschinenkopf (13,14) zugeordnete Bearbeitungseinrichtung (18) für die Bearbeitung des Schweißteils (5,5') nach dem Schweißprozess auf. Die Bearbeitungseinrichtung (18) kann ggf. auch für eine Bearbeitung von ein oder mehreren noch zu verbindenden Bauteilen (2,3,3',4) benutzt werden. Eine solche Bearbeitungseinrichtung (18) ist beispielhaft in Figur 1 bis 5 sowie Figur 11 bis 14 dargestellt. In Figur 1 bis 5 ist eine verkleidete Bearbeitungseinrichtung (18) dargestellt. Figur 11 bis 13 zeigen ein Ausführungsbeispiel bei abgenommener Verkleidung.

Die Pressschweißvorrichtung (1) weist ferner eine Stelleinrichtung (17) auf, mit der eine Relativbewegung zwischen dem Maschinenkopf (13, 14) und der zugeordneten weiteren Bauteilaufnahme (36,37) erzeugt wird. Diese Relativbewegung und die damit einher gehende Abstandsänderung zwischen dem Maschinenkopf (13, 14) und der Bauteilaufnahme (36,37) kann für die Bearbeitung des Schweißteils (5,5') oder ggf. eines Bauteils (2,3,3',4) benutzt werden. Die Stelleinrichtung (17) kann mehrfach vorhanden sein.

In der ersten Variante der Pressschweißvorrichtung (1) von Figur 1 bis 5 sowie Figur 11 bis 13 ist die Bearbeitungseinrichtung (18) am Maschinenkopf (13, 14) angeordnet, wobei die Stelleinrichtung (17) mit der Relativbewegung den Abstand zwischen dem Maschinenkopf (13, 14) und der Bauteilaufnahme (36,37) vergrößert. Hierbei wird ein Freiraum für die Bearbeitungseinrichtung (18) gebildet. Die Stelleinrichtung (17) bewegt vorzugsweise die Bauteilaufnahme (36,37) relativ zum jeweiligen Maschinenkopf (13, 14).

Bei der Relativbewegung wird die Bauteilaufnahme (36,37) geöffnet, wobei das Schweißteil (5) endseitig an den Bauteilaufnahmen (34,35) der Maschinenköpfe (13, 14) gehalten ist. Der Abstand wird so groß gewählt, dass die Bearbeitungseinrichtung (18) genügend Platz für die Zustellung am Schweißteil (5) und für die dortige Ausführung von Prozessbewegungen hat. Die Bearbeitung findet z.B. an der Schweißstelle und am dortigen ringförmigen Schweißwulst (5") statt, der bei der Bearbeitung entfernt wird. Die Schweißstelle befindet sich in der Regel relativ nahe an der maschinenkopfseitigen Bauteilaufnahme (34,35) und wird durch die erwähnte Abstandsbildung gut zugänglich. Die Bearbeitungseinrichtung (18) kann eine oder mehrere angetriebene Zustellachse(n) für ein Bearbeitungswerkzeug (18') haben.

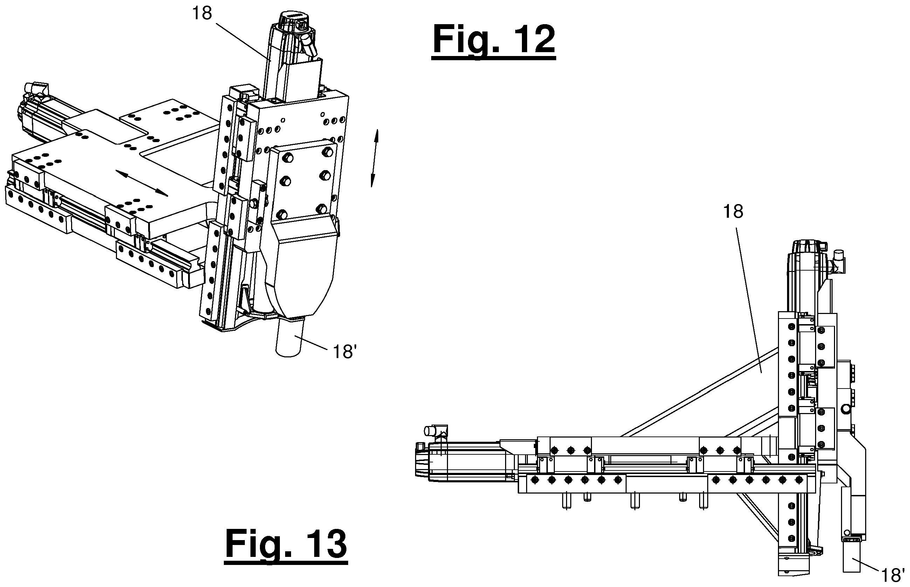

Figur 11 bis 13 verdeutlichen beispielhaft eine Ausbildung der Bearbeitungseinrichtung (18), die in geeigneter Weise an einem Maschinenkopf (13, 14) fest oder lösbar montiert ist. Die in Figur 12 durch Pfeile symbolisierten und z.B. orthogonalen Zustellachsen werden durch einen Kreuzschlitten mit steuerbaren Achsantrieben gebildet. Am abtreibenden, z.B. vertikal zustellbaren, Schlitten ist das schematisch angedeutete Bearbeitungswerkzeug (18') bevorzugt wechselbar angeordnet. Für den Bearbeitungsprozess kann das Bearbeitungswerkzeug (18') durch die Zustellachse(n) an das rotierende oder ruhende Schweißteil (5) zugestellt werden und ggf. auch einen z.B. axialen (6) Prozesshub ausführen. Die Pressschweißvorrichtung (1) kann in der vorbeschriebenen Weise ausgebildet sein. In Figur 11 ist das Schweißteil (5) der Übersicht halber nicht dargestellt.

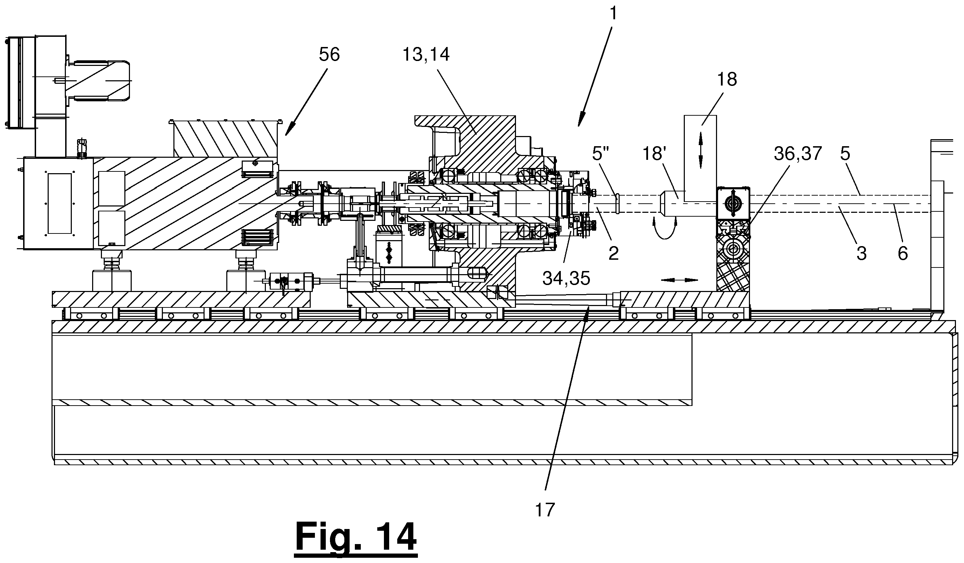

In einer anderen und nicht unter die Ansprüche 1 und 12 fallenden Ausführungsform gemäß Figur 14 kann die Bearbeitungseinrichtung (18) an der weiteren oder zentralen Bauteilaufnahme (36,37) angeordnet sein. Die Stelleinrichtung (17) kann hierbei mit der Relativbewegung eine Positionierung der Bearbeitungseinrichtung (18) an einer Bearbeitungsstelle und/oder einen Arbeitshub der Bearbeitungseinrichtung (18) für die Durchführung der Bearbeitung erzeugen. Auch bei dieser Relativbewegung ist die betreffende weitere Bauteilaufnahme (36,37) geöffnet.

In der gezeigten Ausführungsform von Figur 1 bis 5 sowie Figur 11 bis 13 ist die Bearbeitungseinrichtung (18) als Abtrenneinrichtung, insbesondere als Abdreheinrichtung, für den Schweißwulst (5") ausgebildet. Das Bearbeitungswerkzeug (18') kann hierbei z.B. als ein- oder mehrachsig zustellbarer Drehmeißel ausgebildet sein, der mit dem rotierenden Schweißteil (5) zusammenwirkt, welches von den Maschinenköpfen (13, 14) und deren Spindelantrieben (56) gedreht wird. Alternativ kann das Bearbeitungswerkzeug (18') als rotierender Fräser, Schleifmittel oder in anderer Weise ausgebildet sein. Der Wulstabtrag erfolgt bevorzugt spanabhebend, kann alternativ aber auch auf andere Weise, z.B. durch Erodieren geschehen.

Bei der zweiten und in Figur 14 dargestellten Ausführung kann die an der weiteren Bauteilaufnahme (36,37) angeordnete Bearbeitungseinrichtung (18) z.B. als ringförmige Stanze ausgebildet sein, die mittels der Relativbewegung einen axialen Stanz- und Trennhub gegenüber dem rotierenden oder ruhenden Schweißteil (5,5') ausführt und dabei den Schweißwulst (5") abtrennt. Das Bearbeitungswerkzeug (18') wird z.B. von klappbaren oder zustellbaren Stanzschalen oder Stanzmessern mit frontseitiger Schneidkante gebildet. Die Bearbeitungseinrichtung (18) kann auch bei dieser Variante eine oder mehrere Zustellachse(n) aufweisen.

In weiterer Variation kann die Bearbeitungseinrichtung (18) ein Doppelwerkzeug aufweisen, welches beidseits in Axialrichtung am Schweißwulst (5") angreift und diesen entfernt. Über die Relativbewegung der weiteren Bauteilaufnahme (36,37) kann dabei eine Positionierung an der Prozess- oder Bearbeitungsstelle am Schweißteil (5,5') oder ggf. auch an einem Bauteil (2,3,3',4) stattfinden.

Bei der doppelten Einkopfmaschine von Figur 10 können die Bearbeitungseinrichtung (18) und die Stelleinrichtung (17) in der vorbeschriebenen Weise angeordnet und ausgebildet sein sowie zur Bearbeitung der hier zwei Schweißteile (5') bzw. der Bauteile (2,3,3',4) dienen. An der Bauteilaufnahme (36,37), insbesondere auf deren Träger (42), kann eine Bauteilabstützung (nicht dargestellt) angeordnet sein, welche z.B. als Lünette mit Rollen ausgebildet ist und das drehende Schweißteil (5') abstützt. Eine entsprechende und auf eine Einzelanordnung von Maschinenkopf (13) und weiterer Bauteilaufnahme (36) reduzierte Ausgestaltung gilt auch für die nicht dargestellte Einkopfmaschine.

Die Stelleinrichtung (17) kann in unterschiedlicher Weise ausgebildet und angeordnet sein. Bei den Varianten von Figur 1 und 10 sind zwei Stelleinrichtungen (17) vorhanden, wobei den zentralen Bauteilaufnahmen (36,37) jeweils eine Stelleinrichtung (17) zugeordnet ist. Die einfache Einkopfmaschine hat nur eine Stelleinrichtung (17). Eine solche Ausführung mit einseitiger Bearbeitung ist auch bei Figur 1 und 10 möglich.

Die Stelleinrichtung (17) kann auf unterschiedliche Weise wirken. Sie kann einerseits die vorbeschriebene Relativbewegung und Abstandsänderung für die Bearbeitung bewirken. Sie kann andererseits für eine Längeneinstellung auf unterschiedliche Bauteile (2,3,3',4) mit differierenden Bauteillängen dienen. Sie kann eine Kompensation von Einlegefehlern, Bauteiltoleranzen oder auch Bauteilelastizitäten im Schweißprozess bewirken.

Die Stelleinrichtung (17) weist eine steuerbare und längenveränderliche Koppeleinrichtung (48,49) auf. Diese kann auch mehrfach vorhanden sein.

In den gezeigten Varianten von Figur 1 und 10 befindet sich eine Koppeleinrichtung (48) zwischen der zentralen Bauteilaufnahme (36,37) und dem Stauch- oder Stützkopf (27). Sie bewirkt die Relativbewegung und Abstandsänderung für die Bearbeitung. Sie treibt dabei die Bauteilaufnahme (36, 37) an und bewegt sie relativ zum Stauch- oder Stützkopf (27), an dem sie sich andererseits gestellfest abstützt.

Ferner ist eine Koppeleinrichtung (48) zwischen dem Maschinenkopf (13, 14) und der zugeordneten weiteren Bauteilaufnahme (36,37) angeordnet. Sie treibt und bewegt die Bauteilaufnahme (36,37), wobei sie sich am Stützkopf (13, 14) abstützt. Diese Koppeleinrichtung (48) dient der Kompensation von Einlegefehlern, Bauteiltoleranzen oder auch Bauteilelastizitäten im Schweißprozess

Die Koppeleinrichtungen (48,49) können gleichartig ausgebildet sein. Sie sorgen für eine Verbindung der Komponenten (13,14,27,36,37) in Richtung der Maschinenachse (6) und sind vorzugsweise mit deren jeweiligen Trägern (15,16,42,43) verbunden.

Die Koppeleinrichtungen (48,49) weisen jeweils ein Koppelelement (50) auf. Dieses ist z.B. als einzeln oder mehrfach angeordnete Koppelstange ausgebildet und erstreckt sich vorzugsweise längs der Maschinenachse (6). Die Koppeleinrichtungen (48,49) weisen ferner jeweils eine Arretierung (51) und einen Koppelsteller (52) auf, die mit dem Koppelelement (50) zusammenwirken.

Bei der Koppeleinrichtung (48) ist das Koppelelement (50) zwischen dem Maschinenkopf (13, 14) und der zugeordneten weiteren Bauteilaufnahme (36,37) angeordnet und mit beiden verstellbar verbunden. Die Arretierung (51) ist am Maschinenkopf (13, 14), bevorzugt an dessen Träger (15, 16) angeordnet. Der Koppelsteller (52) befindet sich an der Bauteilaufnahme (36,37), vorzugsweise an deren Träger (42,43). Die Zuordnung kann auch umgedreht sein.

Das Koppelelement (50) der Koppeleinrichtungen (49) ist zwischen der Bauteilaufnahme (36,37) und dem Stauchkopf (27) angeordnet und ebenfalls mit beiden verstellbar verbunden. Die Arretierung (51) ist an der Bauteilaufnahme (36,37), vorzugsweise an deren Träger (42,43), und der Koppelsteller (52) am Stütz- oder Stauchkopf (27) angeordnet. Die Zuordnung kann hier ebenfalls umgedreht sein.

Das Koppelelement (50), insbesondere die Koppelstange, ist am einen Endbereich an der Arretierung (51) längsbeweglich und mit einer steuerbaren Klemmung aufgenommen. Die Arretierung (51) kann z.B. als steuerbare Stangenklemmung ausgeführt sein. Bei geöffneter Klemmung kann das Koppelelement (50) relativ zur Arretierung (51) axial verschoben werden.

Am anderen Endbereich ist das Koppelelement (50) mit dem Koppelsteller (52) verbunden. Der Koppelsteller (52) weist einen Antrieb auf, mit dem er das Koppelelement (50) bedarfsweise längs der Maschinenachse (6) verstellen oder in der vorhandenen Lage blockieren kann. Der Koppelsteller (52) bzw. der Antrieb kann im Rahmen der vorgenannten Verstellung bei entsprechender Beschaltung außerdem bedarfsweise auf Einwirken von äußeren Kräften elastisch nachgeben, z.B. in der Art einer hydraulischen Feder, und dabei eine gewisse Gegenkraft oder Dämpfung entwickeln. Der Koppelsteller (52) bzw. der Antrieb ist z.B. als hydraulischer Blockzylinder ausgebildet. Die Stellwege der Koppelsteller (52) können unterschiedlich lang sein.

Für den Ausgleich von Längenänderungen bei einem Wechsel der Bauteile (2,3,3',4) kann der Maschinenkopf (13, 14) zusammen mit der jeweils zugeordneten Bauteilaufnahme (36, 37) durch den Stauchantrieb (22) relativ zum Stauch- oder Stützkopf (27) verfahren und auf das gewünschte Maß angenähert werden. Hierbei sind die Fixiereinrichtung (46) und die Arretierung (51) der Koppeleinrichtung (48) gelöst. Die Koppeleinrichtung (49) zwischen dem Maschinenkopf (13, 14) und der zugehörigen Bauteilaufnahme (36, 37) ist blockiert. Die Längenverstellung kann ohne oder mit eingelegtem Werkstück (3,3') erfolgen. Die gewünschte Position von Maschinenkopf (13, 14) und zugehöriger Bauteilaufnahme (36,37) kann durch Bauteilkontakt am Stauchanschlag (28) oder durch eine Wegmessung detektiert werden. Am Maschinenkopf (13, 14) kann ebenfalls eine Erfassungseinrichtung für Weg und/oder Position angeordnet sein.

Die Arretierung (51) wird dann wieder geschlossen, so dass das Koppelelement (50) der Koppeleinrichtung (48) nun die angepasste wirksame Länge hat und der gewünschte Abstand zwischen der Bauteilaufnahme (36,37) und dem Stauch- oder Stützkopf (27) für den Schweißprozess eingestellt ist. Der Koppelsteller (52) blockiert bei dieser Einstellung.

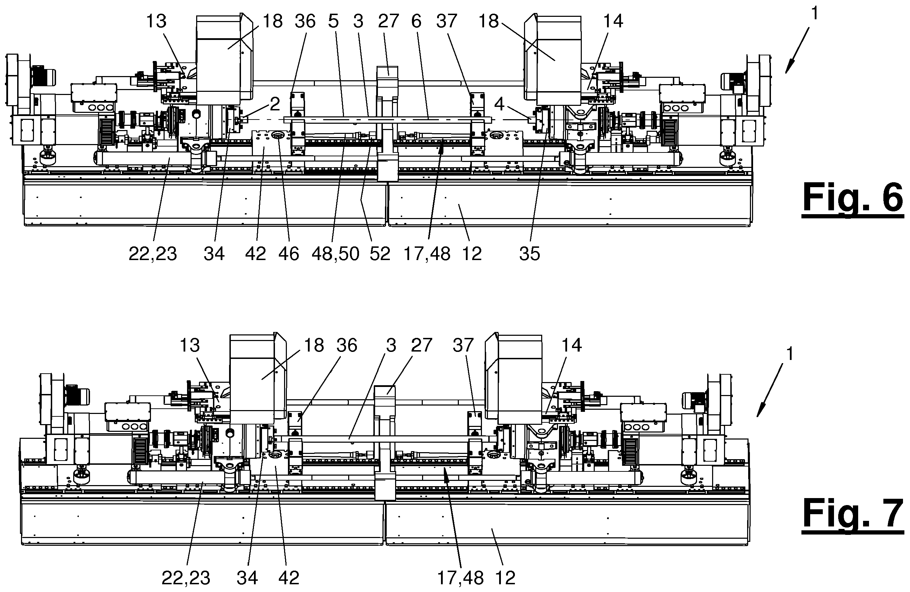

Für den Schweißprozess werden die Bauteile (2,3,3',4) gemäß Figur 6 in die Bauteilaufnahmen (34,35,36,37) eingelegt. Etwaige Einlegefehler oder Bauteillängentoleranzen können nun durch eine gegenseitige Annäherung der eingelegten Bauteile (2,3,3',4) kompensiert werden. Hierfür wird der Koppelsteller (52) der Koppeleinrichtung (49) betätigt und verkürzt den Abstand zwischen dem Maschinenkopf (13, 14) und der zugeordneten Bauteilaufnahme (36,37), wobei die hier aufgenommenen Bauteile (2,3,3'4) in Anschlag miteinander gebracht werden. Die Fixiereinrichtung (46) kann hierfür offen bleiben. Figur 7 zeigt diese Betriebsstellung.

Während des nachfolgenden Schweißprozesses und insbesondere beim Stauchen ist die Fixiereinrichtung (46) ebenfalls geöffnet. Bei einem Vorschub des Maschinenkopfes (13, 14) mittels des Stauchantriebes (22) wird die zugeordnete Bauteilaufnahme (36,37) über die Koppeleinrichtung (48) und über den Bauteilkontakt mitgenommen. Falls sich im Schweißprozess, insbesondere beim Stauchen, axiale Elastizitäten, insbesondere Verkürzungen des Bauteils (3,3') ergeben sollten, kann dies durch den federnd nachgiebigen Koppelsteller (52) der Koppeleinrichtung (48) kompensiert werden. Andererseits gibt auch der Koppelsteller (52) der Koppeleinrichtung (49) nach und gestattet beim axialen Vorschub im Schweißprozess eine Annäherung der Bauteilaufnahme (36,37) an den Stauch- oder Stützkopf (27). Die Bauteilaufnahme (36, 37) wird dadurch im Schweißprozess schwimmend gehalten.

Figur 6 bis 9 verdeutlichen diese vorgenannte Abfolge der Prozessschritte und Bewegungen, wobei Figur 6 und 7 die vorgenannte Längenverstellung und den in diesem Ausführungsbeispiel durchgeführten Reibschweißprozess zeigen.

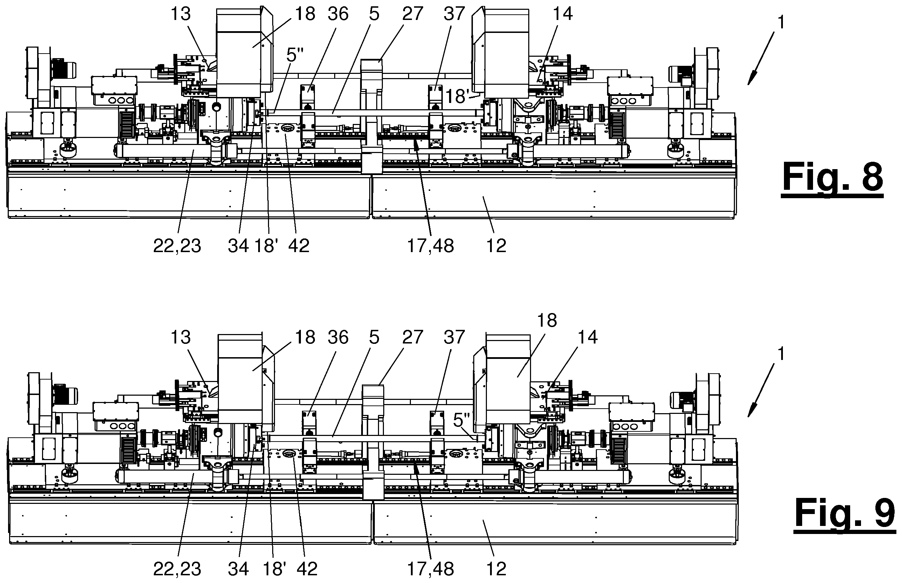

Gemäß Figur 8 wird nach Beendigung des Schweißprozesses die jeweilige Koppeleinrichtung (49) betätigt, um die jeweilige Bauteilaufnahme (36,37) vom zugehörigen Maschinenkopf (13, 14) zu distanzieren und den Freiraum für die jeweilige Bearbeitungseinrichtung (18) und die Bearbeitung des Schweißteils (5) zu schaffen. Figur 7 und 8 verdeutlichen außerdem die nahe Anordnung der Schweißstelle an der jeweiligen maschinenkopfseitigen Bauteilaufnahme (34,35).

Figur 9 zeigt den Bearbeitungsschritt mit der radialen Zustellung des Bearbeitungswerkzeuges (18') an das Schweißteil (5). Zum Abtrennen, insbesondere Abdrehen des Schweißwulstes (5") kann dann das Abtrennwerkzeug (18') zusätzlich in axialer Richtung längs der Maschinenachse (6) bewegt werden. Anschließend wird das Schweißteil (5) entnommen und der Schweißprozess beginnt mit Einlegen der Bauteile (2,3,3',4) von Neuem. Bei der zweiten Variante der Pressschweißvorrichtung (1) in Figur 10 ist der Übersichtlichkeit halber die Bearbeitungseinrichtung (18) nicht dargestellt. Sie hat jedoch die gleiche Anordnung und Funktion wie im vorbeschriebenen ersten Ausführungsbeispiel.

Die Staucheinrichtungen (8) wirken in den gezeigten Ausführungsbeispielen von Figur 1 bis 5 und 10 jeweils zwischen den Maschinenköpfen (13, 14) und dem bevorzugt zentralen Stauch- oder Stützkopf (27). Die Staucheinrichtung (8) entwickelt dabei Zugkräfte in Richtung der Maschinenachse (6). Sie weist einen Stauchantrieb (22) auf, der zwischen dem Maschinenkopf (13, 14) und dem Stauch- bzw. Stützkopf (27) angeordnet und mit beiden verbunden ist. Der Stauchantrieb (22) wirkt auf Zug und zieht die Komponenten (13,14,27) gegeneinander.

Der Stauchantrieb (22) kann in unterschiedlicher Weise ausgebildet sein. In den gezeigten Ausführungsbeispielen weist er zwei oder mehr parallele Antriebseinheiten (23, 24) auf, die längs der Maschinenachse (6) ausgerichtet sind. Die Antriebseinheiten (23,24) sind an verschiedenen Seiten der Maschinenachse (6) angeordnet, insbesondere beidseits und einander diametral zur Maschinenachse (6) gegenüberliegen. Die Antriebseinheiten sind bevorzugt als Zylinder ausgebildet.

Die Antriebseinheiten (23,24) können alternativ in anderer Weise, z.B. als elektrische Stangen- oder Spindelantriebe, ausgebildet sein. Die nachfolgend zu den gezeigten Zylindern (23,24) erläuterten Anordnungen und Ausgestaltungen gelten entsprechend auch für andere Ausführungen von Antriebseinheiten.

Die Zylinder (23,24) sind auf unterschiedlichen Höhen über dem Maschinenbett (12) angeordnet. Der dem Bedienbereich bzw. der Bedienseite (20) benachbarte Zylinder (23) ist dabei tief und knapp über der Oberseite des Maschinenbetts (12) angeordnet.

Die Zylinder (23,24) sind vorzugsweise als hydraulische Zylinder ausgebildet. Sie weisen jeweils eine ausfahrbare Kolbenstange (26) und ein Zylindergehäuse (25) auf. Die Zylindergehäuse (25) sind bevorzugt am Maschinenkopf (13, 14) montiert und abgestützt. Die freien Enden der Kolbenstangen (26) sind am Stauch- oder Stützkopf (27) befestigt. Bei anderen Antriebseinheiten können das Antriebsgehäuse (25) und das ausfahrbare Antriebselement (26), z.B. eine Zahnstange oder eine Gewindespindel, entsprechend angeordnet und verbunden sein.

Bei der Doppelkopfmaschine von Figur 1 bis 5 kommt ein rahmen- oder bügelförmiger Stützkopf (27) zum Einsatz, der einen zentralen Durchlass (85) für das zentrale Werkstück (3) aufweist. Bei der doppelten Einkopfmaschine von Figur 10 ist ein Stauchkopf (27) vorhanden, der einen beidseitig wirkenden Stauchanschlag (28) für die Bauteile (3,3') bietet. Dieser kann z.B. durch einen Einsatz (86) gebildet werden. Dieser kann fest oder lösbar am Stauchkopf (27) angeordnet sein. Er kann z.B. bedarfsweise im Durchlass (85) montierbar sein, so dass die Pressschweißvorrichtung (1) in einer Mehrfachfunktion wahlweise als Doppelkopfmaschine oder doppelte Einkopfmaschine betrieben werden kann.

Die Reibeinrichtung (9) weist in den gezeigten Ausführungsbeispielen am Maschinenkopf (13, 14) jeweils eine drehbare Welle (54), die nachfolgend als Spindel bezeichnet wird, eine frontseitig an der Spindel (54) angeordnete Bauteilaufnahme (34,35), einen Spindelstock und einen Spindelantrieb (56) auf. Der Spindelstock (53) beinhaltet die Lagerung, Führung und Abstützung der Spindel (54) und ist am Maschinenkopf (13, 14) angeordnet und abgestützt. Zwischen der Bauteilaufnahme (34,35) und dem Spindelantrieb (56) befindet sich ein Antriebsstrang (57), der sich längs der Maschinenachse (6) erstreckt und mit dieser vorzugsweise fluchtet.

Eine solche Anordnung kann auch bei der vorgenannten Variante der Plastifizierungseinrichtung (7) mit einer Lichtbogeneinrichtung vorhanden sein.

Der Spindelantrieb (56) ist in der gezeigten Ausführungsform als Direktantrieb ausgebildet. Er weist einen Antriebsmotor (58) auf, dessen Motorwelle (59) im Wesentlichen fluchtend zur Längsachse der Spindel (54) und zur Maschinenachse (6) ausgerichtet ist. Die Motorwelle (59) ist über eine Kupplung (62) mit der Spindel (54) oder einer nachfolgend erläuterten Betätigungseinrichtung (41) für die Bauteilaufnahme (34) gekoppelt. Die Kupplung (62) ist drehfest und biegelastisch ausgebildet. Sie kann evtl. Fluchtungsfehler, insbesondere Seitenversatz und/oder Schrägstellung, ausgleichen. Ferner kann im Antriebsstrang (57) eine steuerbare Bremse (nicht dargestellt) befinden.

Alternativ kann der Antriebsmotor seitlich versetzt von der Spindel (54) sowie der Maschinenachse (6) angeordnet sein und über ein Vorgelege, insbesondere einen Riementrieb, die Spindel (54) antreiben.

In einer weiteren Abwandlung kann der Spindelantrieb (56) eine Schwungscheibenanordnung (nicht dargestellt) aufweisen. Die Schwungscheiben werden vom Antriebsmotor (58) in Rotation um die Maschinenachse (6) versetzt und bewirken dann einen Trägheitsantrieb für die Spindel (54), wobei eine steuerbare Bremse die Drehzahl im Antriebsstrang (57) steuern oder regeln und ggf. die Drehung auch stillsetzen kann. Mittels einer Kupplung kann die Schwungscheibenanordnung vom Antriebsmotor (58) und ggf. von der Spindel (54) getrennt werden.

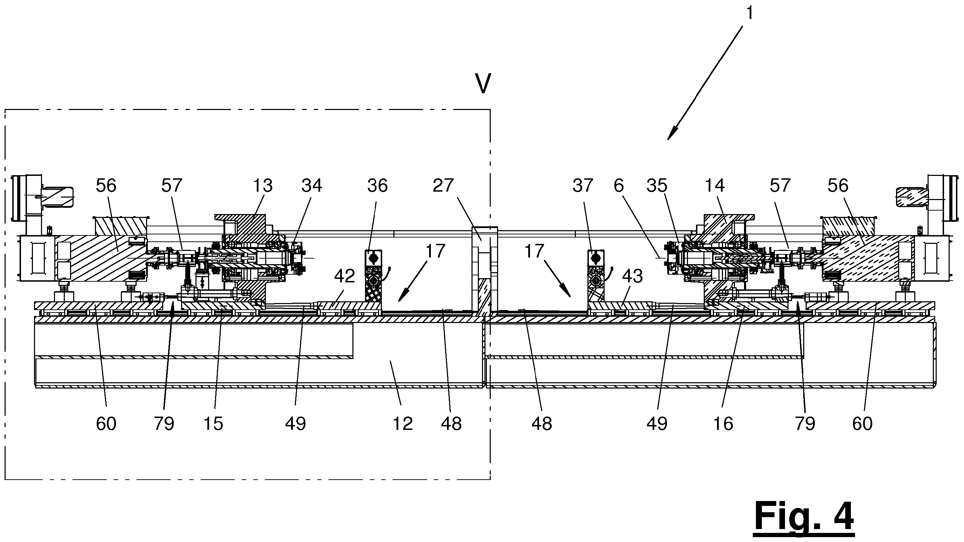

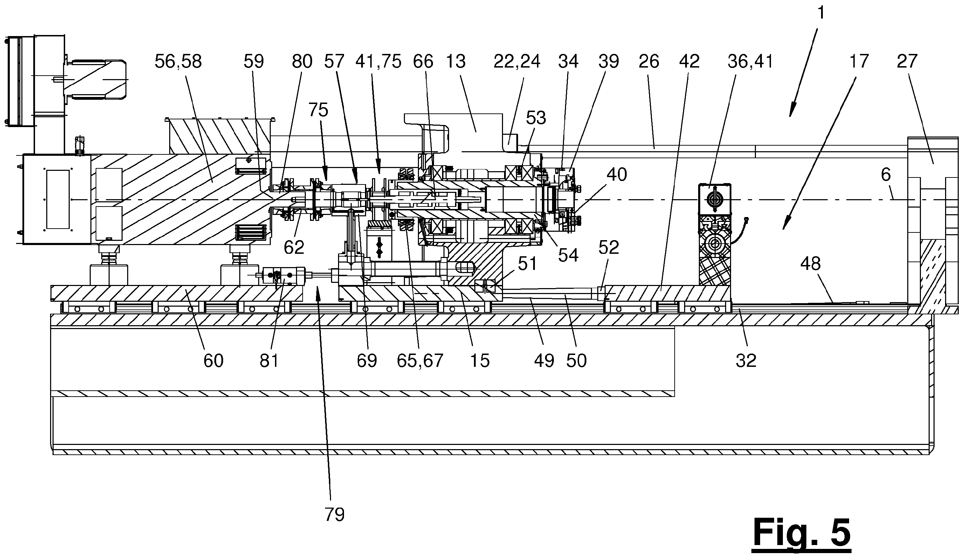

Die Pressschweißvorrichtung (1) weist die besagte Betätigungseinrichtung (41) für die Bauteilaufnahme (34) am Maschinenkopf (13) auf. Sie wirkt bevorzugt auf das oder die Spannelement(e) (40). Die Betätigungseinrichtung (41) weist einen Betätigungsantrieb (65) auf, der zwischen dem Spindelantrieb (56) und der Spindel (54) im Antriebsstrang (57) angeordnet ist. Der Betätigungsantrieb (65) ist dabei vorzugsweise mitdrehend im Antriebsstrang (57) angeordnet. Figur 4 und 5 verdeutlichen diese Anordnung. Der Spindelantrieb (56), insbesondere der Antriebsmotor (58) kann wieder als Direktantrieb vorgesehen und fluchtend zur Maschinen- und Spindelachse (6) ausgerichtet sein, was Vorteile hinsichtlich der freien Motorwahl und der dadurch gegebenen Wirtschaftlichkeit mit sich bringt.

Die Betätigungseinrichtung (41) weist einen Betätigungsantrieb (65) mit einem in Figur 5 gezeigten Betätigungselement (66) auf, welches durch den Innenraum der hohlen Spindel (54) geführt ist und z.B. durch eine Axialbewegung auf die Stellmittel der Spannelemente (40) einwirkt. Der Betätigungs- oder Stellhub kann mit einer Messeinrichtung detektiert und gesteuert oder geregelt werden. Der z.B. hydraulische oder elektrische Betätigungsantrieb (65) besitzt ein mantelförmiges Antriebsgehäuse (67), welches einerseits mit der Motorwelle (59) und andererseits mit dem Mantel der hohlen Spindel (54) drehfest verbunden ist und das Antriebsmoment des Spindelantriebs (65) verformungs- und verlustfrei überträgt.

Die Betätigungseinrichtung (41) weist ferner eine Drehzuführung (69) für Betriebsmittel, z.B. Hydraulikflüssigkeit oder elektrischen Strom, von außen zu dem mit der Spindel (54) drehenden Betätigungsantrieb (65) auf. Hierfür sind externe Leitungen sowie ein Anschlusskopf vorgesehen, der zugleich eine Stützfunktion für die Drehzuführung (69) haben kann. Im Innenraum oder im Mantel der Spindel (54) können interne Leitungen zu den ggf. in der Spindel (54) angeordneten Antriebsmitteln, z.B. einer Kolbenanordnung, verlegt sein.

Die Betriebsmittelversorgung (19) weist im Falle eines hydraulischen Betätigungsantriebs (65) ein Pumpaggregat und eine Ventilanordnung zur Versorgung und Beschaltung des hydraulischen Betätigungsantriebs (65) und seines Abtriebselements (66) auf. Bei einem elektrischen Betätigungsantrieb (65) ist entsprechend eine Stromquelle und eine Schalteinrichtung vorhanden.

Ferner kann im Antriebsstrang (57) zwischen dem Spindelantrieb (56) und der Spindel (54) eine Messeinrichtung (nicht dargestellt) mit einer Messwelle für die Erfassung des Antriebsmoments und ggf. der Antriebsdrehzahl angeordnet ist. Die Messeinrichtung kann zwischen die Motorwelle (59) und die Spindel (54) bzw. die Betätigungseinrichtung (41) geschaltet sein. Die Antriebs- oder Motorwelle (59) kann geteilt ausgebildet sein, wobei die Messwelle zwischen die Wellenhälften eingesetzt ist. Alternativ kann die Antriebs- oder Motorwelle (59) mit geeigneten Messelementen versehen sein und die Messwelle bilden.

Gemäß Figur 1 bis 5 und 10 kann ferner eine Massenentkopplung (79) im Antriebsstrang (57) vorgesehen sein, die den am Maschinengestell (12) beweglich gelagerten Maschinenkopf (13, 14) bei seinem Vorschub im Schweißprozess vom Spindelantrieb (56) in Axialrichtung (6) entkoppelt. Hierbei kann eine axialtolerante Kupplung (80), z.B. eine Schiebehülse, im Antriebsstrang (57) für die Aufrechterhaltung des drehenden Antriebs beim Vorschub des Maschinenkopfs (13, 14) sorgen. Alternativ kann auch eine gegenseitige Distanzierung unter Aufhebung der Antriebsübertragung stattfinden.

Der Spindelantrieb (56) kann dabei ggf. auf einem schlittenartigen Antriebsträger (60) angeordnet und axial verfahrbar am Maschinengestell (12) gelagert und mit dem Maschinenkopf (13, 14), insbesondere dessen Träger (15, 16) über eine Koppeleinrichtung (81) lösbar verbunden sein. Der Spindelantrieb (56) kann ferner für die Massenentkopplung temporär am Maschinengesell (12) mittels einer Antriebsfixierung arretiert werden.

Abwandlungen der gezeigten und beschriebenen Ausführungsbeispiele sind in verschiedener Weise möglich. Insbesondere können die Merkmale der verschiedenen Ausführungsbeispiele beliebig miteinander kombiniert und auch ausgetauscht werden. Der Stauchantrieb (22) kann in konventioneller Weise, z.B. gemäß des eingangs genannten Standes der Technik, ausgeführt sein und Druckkräfte entwickeln. Die Stelleinrichtung (17) kann nur eine Koppeleinrichtung (48,49) zur besagten Relativbewegung für die Bearbeitung oder eine vertauschte Anordnung von Koppeleinrichtungen (48,49) aufweisen. Eine einzelne Koppeleinrichtung kann außerdem bei entsprechender Ausbildung alle genannten Stellfunktionen übernehmen.

### BEZUGSZEICHENLISTE

- 1: Pressschweißvorrichtung, Reibschweißvorrichtung
- 2: Bauteil
- 3: Bauteil
- 3': Bauteil
- 4: Bauteil
- 5: Schweißteil
- 5': Schweißteil
- 5": Schweißwulst
- 6: Längsachse, Maschinenachse
- 7: Plastifiziereinrichtung
- 8: Staucheinrichtung
- 9: Reibeinrichtung
- 10:
- 11: Halterung für Bauteile
- 12: Maschinengestell
- 13: Maschinenkopf
- 14: Maschinenkopf
- 15: Träger, Schlitten
- 16: Träger, Schlitten
- 17: Stelleinrichtung
- 18: Bearbeitungseinrichtung, Abdreheinrichtung
- 18': Bearbeitungswerkzeug
- 19: Betriebsmittelversorgung
- 20: Bedienbereich
- 21: Gehäuse
- 22: Stauchantrieb
- 23: Antriebseinheit, Zylinder
- 24: Antriebseinheit, Zylinder
- 25: Antriebsgehäuse, Zylindergehäuse
- 26: Antriebselement, Kolbenstange
- 27: Stauchkopf, Joch, Stützkopf
- 28: Stauchanschlag
- 29:
- 30:
- 31:
- 32: Führung
- 33:
- 34: Bauteilaufnahme an Maschinenkopf
- 35: Bauteilaufnahme an Maschinenkopf
- 36: Bauteilaufnahme, Zentralaufnahme
- 37: Bauteilaufnahme, Zentralaufnahme
- 38:
- 39: Spanneinrichtung, Spannfutter
- 40: Spannelement
- 41: Betätigungseinrichtung für Bauteilaufnahme
- 42: Träger, Schlitten
- 43: Träger, Schlitten
- 44:
- 45:
- 46: Fixiereinrichtung
- 47:
- 48: Koppeleinrichtung für Zentralaufnahme/Stauchkopf
- 49: Koppeleinrichtung für Zentralaufnahme/Maschinenkopf
- 50: Koppelelement, Koppelstange
- 51: Arretierung, Stangenklemmung
- 52: Koppelsteller, Antrieb, Blockzylinder
- 53: Spindelstock
- 54: Spindel
- 55:
- 56: Reibantrieb, Spindelantrieb
- 57: Antriebsstrang
- 58: Antriebsmotor, Direktantrieb
- 59: Welle, Motorwelle
- 60: Antriebsträger, Schlitten
- 61:
- 62: Kupplung, Drehkupplung
- 63:
- 64:
- 65: Betätigungsantrieb, Zylinder
- 66: Abtriebselement, Kolben, Spindel
- 67: Antriebsgehäuse
- 68: Betätigungselement, Betätigungsstange
- 69: Drehzuführung
- 70:
- 71:
- 72:
- 73:
- 74:
- 75:
- 76:
- 77:
- 78:
- 79: Massenentkopplung
- 80: Kupplung in Antriebsstrang
- 81: Koppeleinrichtung
- 82:
- 83:
- 84:
- 85: Durchlass
- 86: Einsatz, Stauchabstützung
- 87:
- 88:
- 89:
- 90:
- 91:

## Patentansprüche

1. Pressschweißvorrichtung mit einer Plastifizierungseinrichtung (7) und einer Staucheinrichtung (8) sowie Bauteilaufnahmen (34,35,36,37) für die zu verschweißenden Bauteile (2,3,3',4) und einem Maschinengestell (12), wobei die Pressschweißvorrichtung (1) einen Maschinenkopf (13, 14) mit einer Bauteilaufnahme (34,35) und eine zugeordnete weitere Bauteilaufnahme (36,37) aufweist und der Maschinenkopf (13) beweglich am Maschinengestell (12) angeordnet ist, wobei die Pressschweißvorrichtung (1) eine am Maschinenkopf (13, 14) angeordnete Bearbeitungseinrichtung (18) für das Schweißteil (5,5') sowie eine Stelleinrichtung (17) zur Erzeugung einer Relativbewegung zwischen dem Maschinenkopf (13, 14) und der zugeordneten weiteren Bauteilaufnahme (36,37) für die Bearbeitung des Schweißteils (5,5') aufweist, wobei die Stelleinrichtung (17) mit der Relativbewegung den Abstand zwischen dem Maschinenkopf (13, 14) und der Bauteilaufnahme (36,37) vergrößert und einen Freiraum für die Bearbeitungseinrichtung (18) bildet.

2. Pressschweißvorrichtung nach Anspruch 1, **dadurch gekennzeichnet, dass** die weitere Bauteilaufnahme (36,37) beweglich am Maschinengestell (12) angeordnet ist.

3. Pressschweißvorrichtung nach Anspruch 1 oder 2, **dadurch gekennzeichnet, dass** der Maschinenkopf (13, 14) und die weitere Bauteilaufnahme (36,37) längs einer Maschinenachse (6) verfahrbar am Maschinengestell (12) angeordnet sind.

4. Pressschweißvorrichtung nach einem der vorhergehenden Ansprüche, **dadurch gekennzeichnet, dass** die Bearbeitungseinrichtung (18) als Abtrenneinrichtung für einen Schweißwulst (5") am Schweißteil (5,5') ausgebildet ist.

5. Pressschweißvorrichtung nach einem der vorhergehenden Ansprüche, **dadurch gekennzeichnet, dass** die Bearbeitungseinrichtung (18) eine oder mehrere angetriebene Zustellachse(n) für ein Bearbeitungswerkzeug (18') aufweist.

6. Pressschweißvorrichtung nach einem der vorhergehenden Ansprüche, **dadurch gekennzeichnet, dass** die Stelleinrichtung (17) eine steuerbare und längenveränderliche Koppeleinrichtung (48,49) aufweist.

7. Pressschweißvorrichtung nach einem der vorhergehenden Ansprüche, **dadurch gekennzeichnet, dass** eine Koppeleinrichtung (48) zwischen der weiteren Bauteilaufnahme (36,37) und einem gestellfesten Stauchkopf oder Stützkopf (27) angeordnet ist, wobei bevorzugt eine Koppeleinrichtung (49) zwischen dem Maschinenkopf (13, 14) und der zugeordneten weiteren Bauteilaufnahme (36,37) angeordnet ist.

8. Pressschweißvorrichtung nach einem der vorhergehenden Ansprüche, **dadurch gekennzeichnet, dass** die weitere Bauteilaufnahme (36,37) eine schaltbare Fixiereinrichtung (46) zur temporären Festlegung gegenüber dem Maschinengestell (12) aufweist.

9. Pressschweißvorrichtung nach einem der vorhergehenden Ansprüche, **dadurch gekennzeichnet, dass** die Pressschweißvorrichtung (1) mehrere, insbesondere zwei Maschinenköpfe (13, 14) und mehrere, insbesondere zwei dazwischen angeordnete weitere zentrale Bauteilaufnahmen (36,37) aufweist.

10. Pressschweißvorrichtung nach einem der vorhergehenden Ansprüche, **dadurch gekennzeichnet, dass** die Staucheinrichtung (8) einen zwischen dem Maschinenkopf (13, 14) und einem gestellfesten Stauch- oder Stützkopf (27) angeordneten und auf Zug wirkenden Stauchantrieb (22) mit zwei oder mehr parallelen Antriebseinheiten (23,24) aufweist, die längs und beidseitig neben der Maschinenachse (6) angeordnet sind.

11. Pressschweißvorrichtung nach einem der vorhergehenden Ansprüche, **dadurch gekennzeichnet, dass** die Pressschweißvorrichtung (1) als Reibschweißvorrichtung ausgebildet ist, wobei die Plastifizierungseinrichtung (7) eine Reibeinrichtung (9) aufweist oder die Pressschweißvorrichtung (1) als Schweißvorrichtung mit einem magnetisch bewegten Lichtbogen ausgebildet ist, wobei die Plastifizierungseinrichtung (7) eine Lichtbogeneinrichtung aufweist.

12. Verfahren zum Pressschweißen von Bauteilen (2,3,3',4) mittels einer Pressschweißvorrichtung (1), welche eine Plastifizierungseinrichtung (7) und einer Staucheinrichtung (8) sowie Bauteilaufnahmen (34,35,36,37) für die zu verschweißenden Bauteile (2,3,3',4) und ein Maschinengestell (12) sowie einen beweglich am Maschinengestell (12) angeordneten Maschinenkopf (13, 14) mit einer Bauteilaufnahme (34, 35) und eine zugeordnete weitere Bauteilaufnahme (36, 37) aufweist, wobei die Pressschweißvorrichtung (1) eine am Maschinenkopf (13, 14) angeordnete Bearbeitungseinrichtung (18) für das Schweißteil (5,5') sowie eine Stelleinrichtung (17) aufweist, welche eine Relativbewegung zwischen dem Maschinenkopf (13, 14) und der zugeordneten weiteren Bauteilaufnahme (36,37) für die Bearbeitung des Schweißteils (5,5') erzeugt, wobei durch die Stelleinrichtung (17) ein Abstand zwischen dem Maschinenkopf (13, 14) und der Bauteilaufnahme (36, 37) vergrößert und ausreichend Platz für die Bearbeitung geschaffen wird.

13. Verfahren nach Anspruch 12, **dadurch gekennzeichnet, dass** mit der Bearbeitungseinrichtung (18) ein Schweißteil (5,5') in Aufnahme- oder Spannstellung an der Pressschweißvorrichtung (1) nachbearbeitet wird, wobei bevorzugt ein Trennprozess, insbesondere Abdreh- oder Stanzprozess, insbesondere für einen Schweißwulst (5") durchgeführt wird.

14. Verfahren nach Anspruch 12 oder 13, **dadurch gekennzeichnet, dass** mit der Bearbeitungseinrichtung (18) ein oder mehrere noch zu verbindende Bauteile (2,3,3',4) bearbeitet werden.

15. Verfahren nach einem der Ansprüche 12 bis 14, **dadurch gekennzeichnet, dass** die zu verschweißenden Bauteile (2,3,3',4) an ihren einander zugekehrten Stirnrändern durch Reibung oder durch einen umlaufend bewegten Lichtbogen plastifiziert werden.

## Claims

1. Pressure welding apparatus having a plasticizing device (7) and a compressing device (8) and also component mounts (34, 35, 36, 37) for the components (2, 3, 3', 4) to be welded and a machine frame (12), wherein the pressure welding apparatus (1) has a machine head (13, 14) having a component mount (34, 35), and an associated further component mount (36, 37), and the machine head (13) is arranged in a movable manner on the machine frame (12), wherein the pressure welding apparatus (1) has a machining device (18), arranged on the machine head (13, 14), for the welded part (5, 5'), and a setting device (17) for creating a relative movement between the machine head (13, 14) and the associated further component mount (36, 37) for the machining of the welded part (5, 5'), wherein the setting device (17) increases the spacing between the machine head (13, 14) and the component mount (36, 37) by way of the relative movement and forms a clearance for the machining device (18).

2. Pressure welding apparatus according to Claim 1, **characterized in that** the further component mount (36, 37) is arranged in a movable manner on the machine frame (12).

3. Pressure welding apparatus according to Claim 1 or 2, **characterized in that** the machine head (13, 14) and the further component mount (36, 37) are arranged on the machine frame (12) so as to be displaceable along a machine axis (6).

4. Pressure welding apparatus according to one of the preceding claims, **characterized in that** the machining device (18) is in the form of a cut-off device for a weld bead (5") on the welded part (5, 5').

5. Pressure welding apparatus according to one of the preceding claims, **characterized in that** the machining device (18) has one or more driven infeed axis/axes for a machining tool (18').

6. Pressure welding apparatus according to one of the preceding claims, **characterized in that** the setting device (17) has a controllable and variable-length coupling device (48, 49).

7. Pressure welding apparatus according to one of the preceding claims, **characterized in that** a coupling device (48) is arranged between the further component mount (36, 37) and a compressing head or supporting head (27) fixed to the frame, wherein preferably a coupling device (49) is arranged between the machine head (13, 14) and the associated further component mount (36, 37).

8. Pressure welding apparatus according to one of the preceding claims, **characterized in that** the further component mount (36, 37) has a switchable fixing device (46) for temporary fixing with respect to the machine frame (12).

9. Pressure welding apparatus according to one of the preceding claims, **characterized in that** the pressure welding apparatus (1) has several, in particular two machine heads (13, 14) and several, in particular two further central component mounts (36, 37) arranged in between.

10. Pressure welding apparatus according to one of the preceding claims, **characterized in that** the compressing device (8) has a compressing drive (22), which is arranged between the machine head (13, 14) and a compressing or supporting head (27) fixed to the frame and acts under tension, with two or more parallel drive units (23, 24) that are arranged longitudinally and on both sides next to the machine axis (6).

11. Pressure welding apparatus according to one of the preceding claims, **characterized in that** the pressure welding apparatus (1) is in the form of a friction welding apparatus, wherein the plasticizing device (7) has a friction device (9), or the pressure welding apparatus (1) is in the form of a welding apparatus with a magnetically moved electric arc, wherein the plasticizing device (7) has an electric-arc device.

12. Method for the pressure welding of components (2, 3, 3', 4) by means of a pressure welding apparatus (1) that has a plasticizing device (7) and a compressing device (8) and also component mounts (34, 35, 36, 37) for the components (2, 3, 3', 4) to be welded and a machine frame (12), and also a machine head (13, 14), arranged in a movable manner on the machine frame (12), with a component mount (34, 35), and an associated further component mount (36, 37), wherein the pressure welding apparatus (1) has a machining device (18), arranged on the machine head (13, 14), for the welded part (5, 5'), and a setting device (17) that creates a relative movement between the machine head (13, 14) and the associated further component mount (36, 37) for the machining of the welded part (5, 5'), wherein, by way of the setting device (17), a spacing between the machine head (13, 14) and the component mount (36, 37) is increased and sufficient space for machining is created.

13. Method according to Claim 12, **characterized in that**, with the machining device (18), a welded part (5, 5') is reworked in the mounted or clamped position on the pressure welding apparatus (1), wherein preferably a separating process, in particular a turning or punching process, is carried out, in particular for a weld bead (5").

14. Method according to Claim 12 or 13, **characterized in that**, with the machining device (18), one or more components (2, 3, 3', 4) that are still to be connected are machined.

15. Method according to one of Claims 12 to 14, **characterized in that** the components (2, 3, 3', 4) to be welded are plasticized at their mutually facing end edges by friction or by an electric arc moved in an encircling manner.

## Revendications

1. Dispositif de soudage par pression avec un dispositif de plastification (7) et un dispositif de refoulement (8) ainsi que des logements de composants (34, 35, 36, 37) pour les composants à souder (2, 3, 3', 4) et un bâti de machine (12), dans lequel le dispositif de soudage par pression (1) présente une tête de machine (13, 14) avec un logement de composant (34, 35) et un autre logement de composant associé (36, 37) et la tête de machine (13) est disposée de façon mobile sur le bâti de machine (12), dans lequel le dispositif de soudage par pression (1) présente un dispositif de traitement (18) pour la pièce soudée (5, 5') ainsi qu'un dispositif de commande (17) pour la production d'un mouvement relatif entre la tête de machine (13, 14) et l'autre logement de composant associé (36, 37) pour le traitement de la pièce soudée (5, 5'), dans lequel le dispositif de commande (17) augmente avec le mouvement relatif la distance entre la tête de machine (13, 14) et le logement de composant (36, 37) et forme un espace libre pour le dispositif de traitement (18).

2. Dispositif de soudage par pression selon la revendication 1, **caractérisé en ce que** l'autre logement de composant (36, 37) est disposé de façon mobile sur le bâti de machine (12).

3. Dispositif de soudage par pression selon une revendication 1 ou 2, **caractérisé en ce que** la tête de machine (13, 14) et l'autre logement de composant (36, 37) sont disposés sur le bâti de machine (12) de façon déplaçable le long d'un axe de machine (6).

4. Dispositif de soudage par pression selon l'une quelconque des revendications précédentes, **caractérisé en ce que** le dispositif de traitement (18) est formé par un dispositif de coupe pour un bourrelet de soudage (5") sur la pièce soudée (5, 5').

5. Dispositif de soudage par pression selon l'une quelconque des revendications précédentes, **caractérisé en ce que** le dispositif de traitement (18) présente un ou plusieurs axe(s) d'approche entraîné(s) pour un outil de traitement (18').

6. Dispositif de soudage par pression selon l'une quelconque des revendications précédentes, **caractérisé en ce que** le dispositif de commande (17) présente un dispositif de couplage (48, 49) pouvant être commandé et pouvant varier en longueur.

7. Dispositif de soudage par pression selon l'une quelconque des revendications précédentes, **caractérisé en ce qu'**un dispositif de couplage (48) est disposé entre l'autre logement de composant (36, 37) et une tête de refoulement ou une tête d'appui (27) fixe sur le bâti, dans lequel un dispositif de couplage (49) est de préférence disposé entre la tête de machine (13, 14) et l'autre logement de composant associé (36, 37).

8. Dispositif de soudage par pression selon l'une quelconque des revendications précédentes, **caractérisé en ce que** l'autre logement de composant (36, 37) présente un dispositif de fixation commutable (46) pour la fixation temporaire par rapport au bâti de machine (12) .

9. Dispositif de soudage par pression selon l'une quelconque des revendications précédentes, **caractérisé en ce que** le dispositif de soudage par pression (1) présente plusieurs, en particulier deux têtes de machine (13, 14), et plusieurs, en particulier deux autres logements de composant (36, 37) disposés entre celles-ci.

10. Dispositif de soudage par pression selon l'une quelconque des revendications précédentes, **caractérisé en ce que** le dispositif de refoulement (8) présente un entraînement de refoulement (22) disposé entre la tête de machine (13, 14) et une tête de refoulement ou d'appui (27) fixe sur le bâti et agissant en traction avec deux unités d'entraînement parallèles, ou plus (23, 24), qui sont disposées le long et de part et d'autre à côté de l'axe de machine (6).

11. Dispositif de soudage par pression selon l'une quelconque des revendications précédentes, **caractérisé en ce que** le dispositif de soudage par pression (1) est formé par un dispositif de soudage par friction, dans lequel le dispositif de plastification (7) présente un dispositif de friction (9) ou le dispositif de soudage par pression (1) est formé par un dispositif de soudage avec un arc électrique déplacé magnétiquement, dans lequel le dispositif de plastification (7) présente un dispositif à arc électrique.

12. Procédé de soudage par pression de composants (2, 3, 3', 4) au moyen d'un dispositif de soudage par pression (1), qui présente un dispositif de plastification (7) et un dispositif de refoulement (8) ainsi que des logements de composants (34, 35, 36, 37) pour les composants à souder (2, 3, 3', 4) et un bâti de machine (12), ainsi qu'une tête de machine (13, 14) disposée de façon mobile sur le bâti de machine (12) avec un logement de composant (34, 35) et un autre logement de composant associé (36, 37), dans lequel le dispositif de soudage par pression (1) présente un dispositif de traitement (18) pour la pièce soudée (5, 5') disposé sur la tête de machine (13, 14) ainsi qu'un dispositif de commande (17), qui produit un mouvement relatif entre la tête de machine (13, 14) et l'autre logement de composant associé (36, 37) pour le traitement de la pièce soudée (5, 5'), dans lequel on augmente au moyen du dispositif de commande (17) une distance entre la tête de machine (13, 14) et le logement de composant (36, 37) et on procure une place suffisante pour le traitement.

13. Procédé selon la revendication 12, **caractérisé en ce que** l'on parachève avec le dispositif de traitement (18) une pièce soudée (5, 5') dans la position de montage ou de serrage, dans lequel on effectue de préférence une opération de coupe, en particulier une opération de tournage ou de découpage, en particulier pour un bourrelet de soudage (5").

14. Procédé selon une revendication 12 ou 13, **caractérisé en ce que** l'on traite avec le dispositif de traitement (18) un ou plusieurs composants encore à assembler (2, 3, 3', 4).

15. Procédé selon l'une quelconque des revendications 12 à 14, **caractérisé en ce que** les composants à souder (2, 3, 3', 4) sont plastifiés sur leurs bords frontaux tournés l'un vers l'autre par friction ou par un arc électrique déplacé en mouvement tournant.
